# FASCICULE DE BREVET EUROPEEN

(11) **EP 1 883 155 B1**
(45) Date de publication et mention de la délivrance du brevet: **22.05.2019**
(21) Numéro de dépôt: 07112734.4
(22) Date de dépôt: 19.07.2007
(51) Int. Cl.: H02P 8/34

(54) **Procédé de contrôle de la position angulaire d'un moteur pas à pas**
Verfahren zur Positionssteuerung eines Schrittmotors
Method for controlling the angular position of a stepper motor

(30) Priorité: 24.07.2006 FR 0606733
(43) Date de publication de la demande: 30.01.2008
(73) Titulaire: Valeo Systèmes Thermiques, 78321 Le Mesnil St Denis Cedex (FR)
(72) Inventeur: Dani, Alain, D-96450, COBURG (DE); Davier, Florent, 94100, ST MAUR DES FOSSES (FR)
(74) Mandataire: Metz, Gaëlle

(56) Documents cités:
- WO-A-93/25808
- DE-A1- 19 602 371
- JP-A- 9 222 903
- US-A1- 2005 151 499

## Description

### Arrière-plan de l'invention

La présente invention se rapporte au domaine général des moteurs pas à pas et des procédés de contrôle de la position de tels moteurs.

En particulier, de tels moteurs, fonctionnant selon un mouvement de rotation, sont utilisés pour commander les mouvements des volets de distribution dans les systèmes de chauffage, de ventilation et de climatisation de véhicules automobiles, souvent dénommés systèmes HVAC.

Comme il est connu, les moteurs pas à pas assurent le déplacement des volets de distribution d'air entre deux positions extrémales où des butées limitent le mouvement de cet organe mobile. La position du moteur est alors contrôlée par rapport aux butées.

Ce fonctionnement donne globalement satisfaction. Cependant, il a été constaté que des erreurs de position du moteur sont facilement introduites lors des événements de blocage. En particulier, il est nécessaire de réaliser un blocage de plusieurs pas de moteur sur les butées pour les repérer. La position finale n'est donc pas sûre et la procédure de repérage peut être relativement longue ce qui est bien souvent pénalisant. Des erreurs de sens de rotation sont aussi observées sans qu'ils ne soient possibles de les détecter.

En outre, ces moteurs pas à pas ne permettent pas la détermination d'un plus court chemin d'une position à une autre dans la mesure où, pour aller d'un point à un autre, il peut être nécessaire de faire un tour quasi complet.

Il est connu du document WO 93/25808, un procédé de contrôle de la position angulaire d'un organe mobile en rotation sans butée d'un moteur pas à pas. Néanmoins, ce dernier ne permet pas de détecter les anomalies de fonctionnement.

### Objet et résumé de l'invention

La présente invention a donc pour but principal de pallier de tels inconvénients en proposant un procédé de contrôle de la position angulaire d'un moteur pas à pas comprenant un organe mobile en rotation sans butée.

L'invention concerne plus particulièrement un procédé de contrôle de la position angulaire d'un organe mobile en rotation sans butée d'un moteur pas à pas, selon la revendication 1.

Avec un tel procédé, il devient possible de contrôler la position angulaire d'un moteur pas à pas sans butée évitant ainsi tous les problèmes de forçage en particulier sur les butées. Le procédé permet donc d'utiliser une rotation sans butée. Il devient alors possible de contrôler un mouvement de rotation en calculant un plus court chemin entre deux positions angulaires.

Selon une caractéristique particulière, le procédé selon l'invention comprend en outre une étape de vérification, déclenchée quand le test de correspondance est négatif, au cours de laquelle est réalisé au moins un tour complet de l'organe mobile pour vérifier l'occurrence des modifications de l'état de l'organe fixe selon les paramètres préalablement définis en fonction de la position de l'organe mobile.

Avec une telle caractéristique, l'invention permet de détecter une ou des anomalies de fonctionnement sur un tour complet de l'organe mobile. Cette caractéristique permet de confirmer ou d'infirmer un test de correspondance négatif.

Selon une autre caractéristique particulière, le procédé comprend en outre une étape de décision de placer le moteur en un mode normal quand le test de correspondance est positif ou quand la vérification est correcte ou en un mode relatif où la position du moteur est déterminée par rapport à la position dans laquelle il est à la fin de l'étape de vérification quand la vérification est erronée
Comme le contrôle de position est basé sur le suivi de l'état de l'organe fixe, cette caractéristique permet d'utiliser cet état pour modifier le fonctionnement du moteur.

Selon une autre caractéristique, le procédé comprend une étape de signalisation du passage en mode relatif sur une interface homme machine.

Ainsi, les anomalies éventuelles sont signalées, par exemple à un opérateur.

Selon une caractéristique de l'invention, le procédé inclut une étape d'enregistrement dans une mémoire non volatile de la décision de passer en mode relatif avec le résultat de l'étape de vérification.

Une telle caractéristique permet de conserver des paramètres associés au passage en mode relatif, par exemple l'heure à laquelle il a eu lieu. Un journal des événements est alors disponible. Dans l'application automobile, un tel journal est utile pour le garagiste qui a alors accès aux diverses pannes et anomalies. D'autres paramètres mesurés à ce moment là peuvent aussi être enregistrés.

Selon une caractéristique particulière, le résultat de l'étape de vérification permet de distinguer un défaut du à l'organe fixe d'un défaut du à l'organe mobile.

En particulier, il est intéressant de disposer d'une telle information dans le journal des événements pour des réparations ultérieures. L'invention permet donc d'optimiser le diagnostic d'une panne du moteur pas à pas.

Selon une autre caractéristique, en mode normal, quand le test de correspondance est négatif et qu'une décision de passage en mode relatif est enregistrée dans la mémoire non volatile, il est déclenché une étape de calibration, au cours de laquelle est réalisé au moins un tour complet de l'organe mobile lors duquel sont enregistrées des paramètres des modifications de l'état de l'organe fixe.

Dans la mesure où un passage en mode relatif a été enregistré, quand le test de correspondance se trouve être négatif, une simple phase de vérification s'avérera généralement de nouveau erronée. Il n'est donc pas utile de réaliser une simple vérification. Dans ce cas, il est utile de redéfinir les paramètres des modifications de l'état de l'organe fixe. C'est la fonction de l'étape de calibration.

Selon d'autres caractéristiques, en mode relatif, le procédé inclut une étape de réception d'une demande d'effacement du résultat de l'étape de vérification stipulant un défaut de l'organe mobile, une étape d'effacement du défaut de l'organe mobile dans la mémoire non volatile, cette étape d'effacement provoquant le déclenchement d'une étape de calibration, au cours de laquelle est réalisé au moins un tour complet de l'organe mobile lors duquel sont enregistrées des paramètres des modifications de l'état de l'organe fixe.

Le procédé peut aussi inclure, en mode relatif, une étape de réception d'une demande d'effacement du résultat de l'étape de vérification stipulant un défaut de l'organe fixe, une étape d'effacement du défaut de l'organe fixe, cette étape d'effacement provoquant le déclenchement d'une étape de calibration ou d'une étape de vérification en fonction de la présence ou non d'un enregistrement d'un défaut de l'organe mobile.

Ces dernières caractéristiques permettent de commander une réinitialisation du moteur par enregistrement des paramètres des modifications de l'état de l'organe fixe dès lors qu'un utilisateur externe demande la suppression des événements ayant conduit au passage en mode relatif. Le contrôle extérieur du journal des événements concernant le moteur pas à pas selon l'invention déclenche ainsi une réaction du procédé qui se réinitialise par une calibration.

Dans un mode de réalisation avantageux, les paramètres des modifications de l'état de l'organe fixe sont préalablement définis dans une étape de calibration préalable au cours de laquelle est réalisé au moins un tour complet de l'organe mobile lors duquel sont enregistrées des paramètres des modifications de l'état de l'organe fixe.

Une telle étape de calibration préliminaire est déclenchée quand aucune caractéristique de modification de l'état de l'organe fixe n'est enregistrée dans la mémoire non volatile. Elle permet d'initialiser le procédé quand celui-ci est mis en route une première fois.

Le procédé peut également inclure une étape de réception d'une demande extérieure de déclenchement d'une étape de calibration, au cours de laquelle est réalisé au moins un tour complet de l'organe mobile lors duquel sont enregistrées des paramètres des modifications de l'état de l'organe fixe.

Une telle caractéristique permet à un garagiste, par exemple, de provoquer une calibration du moteur quel que soit le moment.

Selon une réalisation avantageuse, le test de correspondance est effectué lorsqu'une modification de l'état de l'organe fixe est attendue au vu des paramètres prédéfinis ou lorsque le moteur est à l'arrêt.

Cette réalisation permet d'économiser les ressources logicielles qui mettent en oeuvre le procédé et suffit pour réaliser un contrôle de la position du moteur satisfaisant.

Avantageusement, les paramètres des modifications de l'état de l'organe fixe sont tels qu'ils permettent de définir le sens de rotation de l'organe mobile.

Il s'agit ici d'avoir une coopération entre l'organe fixe et l'organe mobile telle que les paramètres des modifications de l'état de l'organe fixe sont distincts dans un sens de rotation et dans l'autre. Lors du test de correspondance, puis de l'étape de vérification déclenchée, l'invention permet de détecter aisément un tel défaut.

En particulier, l'invention concerne un procédé pour lequel, l'état de l'organe fixe pouvant être modifié entre deux états, les paramètres des modifications incluent, en référence à l'origine angulaire, les nombres de pas ou des pourcentages de la circonférence correspondant à deux modifications du premier état vers le second état, les nombres de pas ou des pourcentages de la circonférence correspondant à deux modifications du second état vers le premier état, modifications due à la présence de deux cames d'une longueur en nombre de pas différentes sur l'organe mobile.

Une telle réalisation présente l'avantage d'être particulièrement robuste et adaptée aux conditions, notamment thermiques et vibratoires, de l'environnement automobile tout en ayant les avantages du fonctionnement en une rotation sans butée.

L'invention concerne aussi un moteur pas à pas selon la revendication 15.

Avantageusement, le moteur est tel que l'organe mobile en rotation supporte deux cames de tailles différentes en nombre de pas du moteur.

Dans une réalisation, l'organe fixe est un contacteur à poussoir.

L'invention concerne aussi un véhicule automobile équipé d'un dispositif d'actionnement de volet de ventilation/climatisation comportant un moteur pas à pas selon l'invention.

Selon une implémentation préférée, les différentes étapes du procédé sont déterminées par des instructions de code de programmes informatiques.

En conséquence, l'invention vise aussi un programme informatique sur un support d'informations, ce programme étant susceptible d'être mis en oeuvre dans une unité de contrôle d'un moteur pas à pas selon l'invention, ce programme comportant des instructions de code adaptées à la mise en oeuvre des étapes d'un procédé selon l'invention.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par une unité de contrôle d'un moteur pas à pas, et comportant des instructions de code d'un programme informatique tel que mentionné ci-dessus.

Le support d'informations peut être n'importe quelle entité ou dispositif capable de stocker le programme. Par exemple, le support peut comporter un moyen de stockage, tel qu'une ROM, par exemple une ROM de circuit microélectronique, ou encore un moyen d'enregistrement magnétique, par exemple un disque dur.

Alternativement, le support d'informations peut être un circuit intégré dans lequel le programme est incorporé, le circuit étant adapté pour exécuter ou pour être utilisé dans l'exécution du procédé en question.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est une représentation schématique d'un moteur pas à pas sur lequel est mis en oeuvre un procédé de contrôle de position selon l'invention,
- la figure 2 est un organigramme illustrant les différentes étapes du procédé de contrôle de position selon l'invention,
- les figures 3a à 3f illustrent le fonctionnement du moteur pas à pas de la figure 1 lors d'une étape de vérification ou de calibration du procédé selon l'invention.

### Description détaillée d'un mode de réalisation

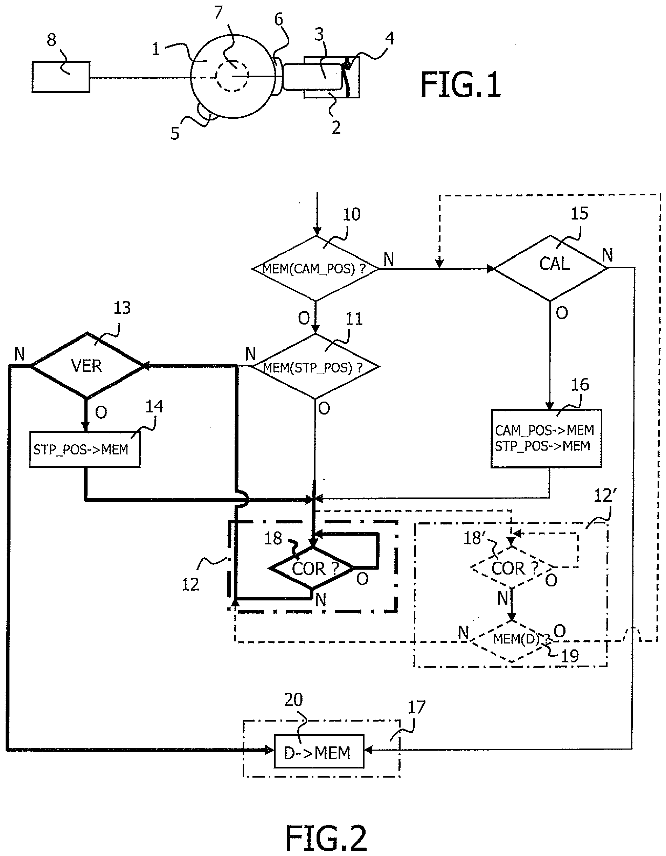

La figure 1 donne un exemple de réalisation d'un moteur pas à pas mettant en oeuvre un procédé de contrôle de position selon l'invention.

Ce moteur comprend un organe mobile 1 en rotation sans butée. On entend par « rotation sans butée » l'aptitude à tourner de 360° dans un sens ou dans l'autre un nombre indéfini de fois.

Selon l'exemple de la figure 1, l'organe mobile 1 est apte à coopérer avec un organe fixe 2. Dans l'exemple proposé, l'organe fixe 2 est un contacteur comprenant un poussoir 3 apte à provoquer un contact sur un interrupteur 4.

Dans l'exemple de réalisation proposé, pour coopérer avec l'organe fixe 2, l'organe mobile 1 supporte deux cames 5 et 6 de longueurs différentes c'est-à-dire s'étendant sur une longueur angulaire différente. Elles présentent ainsi des tailles différentes en nombre de pas du moteur.

Les cames 5 et 6 sont aptes à coopérer avec l'organe fixe 2 dont l'état est susceptible d'être modifié par le passage des cames 5 et 6 lors de la rotation de l'organe mobile 1.

Pour être mis en rotation, l'organe mobile 1 est relié à un bloc moteur 7 lui-même relié à une unité de contrôle 8 du bloc moteur 7. Le procédé de contrôle de la position est mis en oeuvre dans l'unité de contrôle 8 et contrôle la position de l'organe mobile 1.

Un tel moteur pas à pas est, par exemple, utilisé pour commander des volets d'un dispositif de chauffage, de ventilation et de climatisation dans un véhicule.

La figure 2 est un organigramme décrivant un mode de réalisation préférentiel d'un procédé de contrôle de la position angulaire d'un organe mobile du moteur pas à pas de la figure 1.

L'invention proprement dite sera décrite essentiellement en regard de la partie de l'organigramme représentée en traits gras, la fonction de l'invention étant de contrôler la position de l'organe mobile 1 du moteur.

Le procédé de contrôle de position selon l'invention requiert que des paramètres CAM_POS des modifications de l'état de l'organe fixe 2 lorsque l'organe mobile 1 fait un tour complet soient préalablement définies. Ces paramètres CAM_POS associent chaque position angulaire de l'organe mobile 1 à un état de l'organe fixe 2. L'état de l'organe fixe 2 correspond à la présence ou à l'absence d'une came au niveau de l'organe fixe 2 à la position angulaire donnée. Par conséquent, les paramètres CAM_POS donnent, en fait, la position angulaire des cames.

Selon le procédé, la position de l'organe mobile 1 est considérée comme définie et une valeur angulaire STP_POS y est donc attachée. Une telle valeur angulaire STP_POS peut être un nombre de pas modulo le nombre de pas total pour faire un tour complet ou encore un pourcentage allant de 0% à 100% pour les angles allant de 0° à 360°. Ainsi, les paramètres CAM_POS peuvent donc être définis comme un ensemble de positions angulaires, chacune associée à un état de l'organe fixe 2, et repérées par rapport à la même origine que la valeur angulaire STP_POS.

La première étape du procédé de contrôle de position consiste en un test de correspondance 18 au cours duquel l'état de l'organe fixe 2 est comparé aux paramètres préalablement définis CAM_POS pour la position STP_POS dans laquelle se trouve l'organe mobile 1.

Avantageusement, le test de correspondance 18 a lieu lors de l'arrêt du moteur ou à chaque fois qu'un changement de l'état de l'organe fixe 2 est attendue selon la caractéristique CAM_POS préalablement définie pour la position angulaire STP_POS considérée. Il est aussi possible mais relativement couteux en ressources du système de réaliser le test de correspondance 18 en permanence c'est-à-dire également lors de mouvements du moteur pour lesquels on n'attend pas de modification de l'état de l'organe fixe 2.

En sortie du test de correspondance 18, deux cas peuvent se présenter. Dans un premier cas, cas O sur la figure 2, l'état de l'organe fixe 2 correspond aux paramètres préalablement définis CAM_POS. Dans ce cas, il n'est pas réalisé d'action spécifique, le test de correspondance 18 est bouclé sur lui-même pour les prochains mouvements de l'organe mobile 1 et le mode normal 12 reste activé. Le procédé se poursuit par l'activation d'un nouveau test de correspondance 18 lors d'un prochain arrêt du moteur ou d'une prochaine modification attendue de l'état de l'organe fixe 2.

Dans un second cas (cas N), l'état de l'organe fixe 2 ne correspond pas aux paramètres préalablement définis CAM_POS, le test de correspondance 18 est alors négatif.

Une étape de vérification 13 est alors réalisée au cours de laquelle un tour complet de l'organe mobile 1 est effectué et au cours de laquelle les états de l'organe fixe 2 sont comparés aux paramètres prédéfinis CAM_POS.

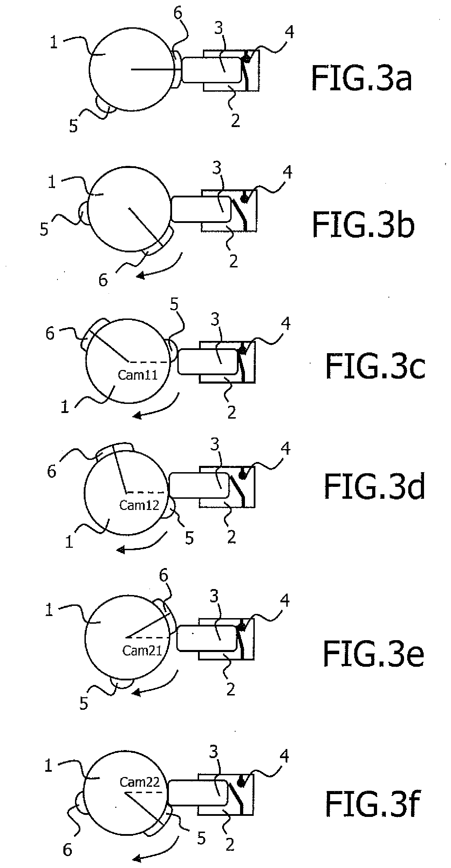

La figure 3 illustre une telle étape de vérification 13. Comme illustré sur la figure 3a, l'organe mobile 1 est alors amené, à une position préalablement définie comme étant le zéro de la rotation de 360° de l'organe mobile 1 par rapport à l'organe fixe 2.

Dans l'exemple proposé sur les figures 3a à 3f, le zéro a été défini comme le milieu de la plus grande came, à savoir la came 6. Quand l'organe mobile 1 est dans cette position, le poussoir 3 est appuyé et provoque un contact au niveau de l'interrupteur 4. Ce contact définit l'état de l'organe fixe 2. La présence de ce contact est signalée à l'unité de contrôle 8 du moteur en même temps que la position de l'organe mobile 1, ici zéro.

L'organe mobile 1 est ensuite mis en rotation comme illustré sur la figure 3b par l'intermédiaire du bloc moteur 7 commandé par l'unité de contrôle 8. La came 5 se déplace alors et quitte le poussoir 3 qui libère alors le contact au niveau de l'interrupteur 4. L'état de l'organe fixe 2 est donc modifié. La cessation du contact est signalée à l'unité de contrôle 8 en même temps que la position de l'organe mobile 1 observée à ce moment là. Par exemple, un nombre de pas correspondant au nombre de pas réalisé par le moteur à ce moment là sera alors signalé à l'unité de contrôle 8. Comme on a vu précédemment, d'autres grandeurs peuvent être utilisées pour quantifier la position de l'organe mobile 1, notamment un pourcentage.

Comme représenté sur la figure 3c, la came 5 arrive ensuite face au poussoir 3 et provoque de nouveau le contact au niveau de l'interrupteur 4. L'occurrence de ce contact ainsi que le nombre de pas réalisés depuis le zéro avant ce contact est signalé à l'unité de contrôle 8.

Puis, comme montré sur la figure 3d, la rotation de l'organe mobile 1 se poursuit et la came 5 quitte le poussoir 3, engendrant une cessation du contact au niveau de l'interrupteur 4. De nouveau, la cessation du contact et le nombre de pas nécessaires pour l'obtenir sont signalés à l'unité de contrôle 8 qui les enregistre.

Ensuite, la came 5 est amenée face au poussoir 3, conformément à la figure 3e et engendre un nouveau contact. Ce contact et le nombre de pas nécessaire pour obtenir ce nouveau contact sont alors signalés à l'unité de contrôle 8 qui les enregistre.

Eventuellement comme représenté sur la figure 3f, la rotation de l'organe mobile 1 est poursuivie jusqu'à ce que la came 5 quitte de nouveau le poussoir 3.

Tout au long de l'étape de vérification décrite ci-dessus, la présence ou l'absence de contact au niveau de l'organe fixe 2 associé à la position STP_POS de l'organe mobile 1 sont comparées aux paramètres préalablement définis CAM_POS.

Plusieurs cas peuvent ici être rencontrés.

Si l'état de l'organe fixe 2 est bien modifié selon les paramètres prédéfinis CAM_POS, l'étape de vérification 13 est réussie et le mode normal est réintégré (cas O sur la figure 2).

Sinon, dans le cas N, le moteur pas à pas est basculé dans un mode relatif 17 où la rotation du moteur peut être commandée à l'aveugle, par exemple par un utilisateur, mais où la position n'est pas garantie. Le moteur pas à pas ne peut alors être mis en mouvement que de manière relative par rapport à la dernière position dans laquelle il était à la fin de l'étape de vérification.

Eventuellement, lorsqu'une valeur STP_POS était stockée en mémoire avant l'étape de vérification soldée par un échec, le moteur est référencé, pour les mouvements ultérieurs en mode relatif, par rapport à cette position STP_POS, supposée exacte.

Un tel passage en mode relatif 17 est signalé sur une interface homme machine de manière à prévenir qu'une révision ou qu'une réparation est nécessaire.

Selon une caractéristique avantageuse de l'invention, il est possible de stocker, dans une étape 20, l'occurrence d'un défaut, noté D sur la figure 2, dans une mémoire non volatile MEM. Un journal des défauts peut alors être constitué avec l'instant de l'occurrence du défaut et l'action engendrée. Il est aussi possible selon l'invention de qualifier la nature du défaut D dans la mémoire MEM.

Ainsi, dans un mode de réalisation avantageux, l'étape de vérification 13 est apte à distinguer plusieurs types de défauts D. Le journal conserve alors aussi le type de défauts rencontrés et entrainant l'échec de l'étape de vérification 13.

Une première distinction existe entre les défauts relatifs à l'organe mobile 1 et ceux relatif à l'organe fixe 2. Avantageusement, l'enregistrement d'un défaut, par exemple relatif à l'organe fixe 2, revient à donner une valeur qualifiant la nature du défaut de l'organe fixe à un registre de la mémoire MEM dédié à stocker les défauts de l'organe fixe.

Ainsi, si on observe que l'interrupteur 4 reste appuyé en permanence, une valeur, par exemple UBAT, tension de la batterie, est stockée dans le registre dans lequel sont stockés les défauts relatifs à l'organe fixe.

Si on observe au contraire que l'interrupteur est en permanence à la masse alors la valeur stockée peut être prise égale à la masse GND.

Si les cames 5 et 6 apparaissent lors de la vérification mais avec des positions de l'organe mobile 1 associées différentes de celles stockées dans les paramètres prédéfinis, une rotation en sens inverse peut alors être détectée. Une valeur signalant le défaut « rotation inversée » est alors stockée dans le registre dédié aux défauts de l'organe mobile 1.

D'une manière semblable, si on observe que l'organe mobile 1 ne présente qu'une came au lieu de deux, une valeur choisie pour signaler le défaut « une seule came » est stockée dans le registre dédié aux défauts de l'organe mobile.

Sinon, par exemple, les registres stockent une valeur nulle signalant qu'il n'existe pas de défaut.

Le journal des défauts pourra être utilisé selon certaines caractéristiques avantageuses de l'invention.

Dans la suite est décrit l'ensemble du mode de réalisation préférentiel tel qu'illustré sur la figure 2 qui décrit un procédé de contrôle de position à partir du démarrage du véhicule.

Au démarrage du véhicule, l'unité de contrôle 8 vérifie tout d'abord, lors d'une étape 10, que des paramètres préalablement définis CAM_POS pour les modifications de l'état de l'organe fixe 2 sont stockées dans une mémoire non volatile MEM.

Lorsqu'un moteur pas à pas tel que décrit sur la figure 1 est utilisé, les paramètres prédéfinis CAM_POS sont les positions des deux cames 5 et 6 à partir d'une origine ou zéro prédéfini(e). Dans l'exemple de la figure 3, le milieu de la plus grande came, à savoir la came 5, est choisi comme zéro.

Quand la mémoire MEM comprend ces paramètres prédéfinis, l'unité de contrôle 8 vérifie alors, dans une étape 11, qu'une dernière position STP_POS du moteur pas à pas est stockée dans la mémoire MEM. Si cette dernière position STP_POS est stockée, le procédé passe le moteur pas à pas en mode normal 12 où la position du moteur est alors, avant toute commande de mouvement, la dernière position STP_POS.

Si cette dernière position STP_POS n'est pas stockée dans la mémoire MEM, le procédé réalise alors une étape de vérification 13 au cours de laquelle l'organe mobile 1 effectue au moins un tour complet.

Dans le cas O de l'étape de vérification, les deux cames 5 et 6 sont alors détectées par l'organe fixe 2 et, quand, à la fin du tour, l'organe mobile est de nouveau dans sa position de départ, cette position STP_POS peut être repérée par rapport aux deux cames 5 et 6. Elle est alors stockée en mémoire MEM lors d'une étape 14 et le moteur est passé en mode normal 12 où la position STP_POS du moteur est connue avant toute commande de mouvement. Alternativement, lors de cette définition de la position STP_POS, il est possible de choisir un zéro, par exemple, comme vu précédemment, au milieu de la plus grande came.

Lorsque, lors de l'étape 10, les positions des cames ne sont pas stockées en mémoire, une étape de calibration 15 est réalisée. Cette étape de calibration 15 est similaire à l'étape de vérification décrite auparavant en référence à la figure 2 au détail près que l'organe mobile 1 n'est pas placé de manière à être sur le zéro au début du processus mais placé de manière aléatoire.

Il peut être prévu que la calibration ne débute que lorsque l'interrupteur 4 est ouvert, situation par exemple provoquée par une rotation du moteur jusqu'à l'obtenir.

Dans un exemple de réalisation, un tour complet est réalisé en 7200 pas, les deux cames sont séparées de 3400 pas, la plus grande came a une longueur angulaire équivalente à 800 pas et la plus petite came a une longueur angulaire équivalente à 400 pas.

Lors d'une calibration 15, l'organe mobile 1 commence à tourner, par exemple à partir d'une position où l'organe fixe est tel que le contact est relâché, puis rencontre un premier changement d'état de l'organe fixe 2, par exemple le début de la petite came 5, repéré Cam11 sur la figure 3, un zéro intermédiaire est alors pris comme étant la position angulaire où a eu lieu ce changement d'état.

Les autres changements d'état Cam12, Cam11, Cam12 sont repérés par rapport à ce zéro. Une fois les positions des cames trouvées, les paires Cam11, Cam12 et Cam21, Cam22 sont associées chacune à une des cames 5 et 6 et leurs positions sont avantageusement recalculées par rapport au milieu de la grande came 6.

Les positions des cames CAM_POS sont alors enregistrées en mémoire MEM dans une étape 16. Lors de cette étape 16, la position STP_POS de l'organe mobile 1 est également repérée, initialisée et enregistrée.

On constate ici qu'il est possible, dans la mesure où les cames ne sont pas identiquement distantes pour les deux sens de rotation, de détecter que le sens de rotation a été inversé.

Par exemple, avant toute commande de mouvement, l'organe mobile 1 est placé sur le zéro de son mouvement de circonférence, ici, par exemple, au milieu de la plus grande came 5.

La position STP_POS de l'organe mobile 1 est enregistrée également comme étant alors nulle. Le moteur est ensuite passé en mode normal 12.

Lorsque l'étape de calibration 15 n'aboutit pas de manière satisfaisante, c'est-à-dire, dans l'exemple, en une définition des paramètres prédéfinis des modifications de l'état de l'organe fixe 2, le moteur est alors basculé en mode relatif 17.

Ici aussi, le passage en mode relatif ainsi qu'un défaut D l'ayant causé est alors avantageusement stocké en mémoire MEM. D'une manière similaire à ce qui a été décrit pour l'étape de vérification, il est aussi possible de qualifier les défauts et donc de stocker une valeur associée à la nature du défaut D.

Le mode préférentiel décrit sur la figure 2 est tel qu'à chaque démarrage, dès lors que des données CAM_POS et STP_POS sont disponibles, le moteur bascule en mode normal et ce, même si il y a eu un défaut et un passage en mode relatif lors d'un fonctionnement précédent. Si le défaut existe encore lorsque l'organe mobile 1 est mis en mouvement, le test de correspondance 18 révèle alors de nouveau ce défaut.

Selon le mode préférentiel décrit sur la figure 2, un traitement particulier et optionnel de ce cas est proposé en pointillés. Ce traitement optionnel utilise la mémoire des défauts D conservée d'un démarrage à l'autre dans le journal des défauts D. Il suffit en effet de consulter le journal des défauts D stocké en mémoire non volatile pour savoir qu'un passage en mode relatif 17 a eu lieu lors du fonctionnement précédent.

Selon ce traitement optionnel, dès lors que des données CAM_POS et STP_POS sont disponibles, le moteur est en mode normal 12'. Dans ce mode normal 12', le test de correspondance, noté 18', est complété par une consultation 19 des passages en mode relatif 17 et des défauts D stockés dans la mémoire MEM. La consultation 19 est déclenchée quand le test de correspondance 18' est négatif (cas N).

Selon le traitement optionnel, quand un passage en mode relatif 17 a été stocké dans le journal des défauts (cas O), une étape de calibration 15 est réalisée au cours de laquelle est réalisé au moins un tour complet de l'organe mobile 1 lors duquel sont enregistrées des paramètres des modifications de l'état de l'organe fixe 2. En revanche, quand le journal des défauts D ne contient pas de passage en mode relatif 17, une simple étape de vérification 13 est effectuée.

On remarque enfin que diverses mises en oeuvre peuvent être réalisées selon les principes de l'invention. En particulier, divers usages du journal des défauts peuvent être mis en oeuvre en plus de l'invention ou en combinaison avec elle, comme illustré dans le traitement optionnel proposé ci-dessus, sans exclure de tels modes de réalisation de la portée de l'invention définie dans les revendications suivantes.

## Revendications

1. Procédé de contrôle de la position angulaire [STP_POS] d'un organe mobile [1] en rotation sans butée d'un moteur pas à pas, ledit organe mobile [1] étant destiné à coopérer avec au moins un organe fixe [2] dont l'état est susceptible d'être modifié lors de la rotation de l'organe mobile [1] **caractérisé en ce que** l'état est modifié selon des paramètres [CAM_POS] préalablement définis en fonction de la position angulaire [STP_POS] de l'organe mobile [1], le procédé comprenant les étapes suivantes :
- associer chaque position angulaire [STP_POS] de l'organe mobile [1] à un état de l'organe fixe [2] pour définir les paramètres [CAM_POS],
- faire un test de correspondance [18] en comparant l'état de l'organe fixe [2] avec les paramètres [CAM_POS] préalablement définis, pour la position [STP_POS] dans laquelle se trouve l'organe mobile [1].

2. Procédé selon la revendication 1, **caractérisé en ce qu'**il comprend en outre une étape de vérification [13], déclenchée quand le test de correspondance [18] est négatif, au cours de laquelle est réalisé au moins un tour complet de l'organe mobile [1] pour vérifier l'occurrence des modifications de l'état de l'organe fixe [2] selon les paramètres préalablement définis [CAM_POS] en fonction de la position [STP_POS] de l'organe mobile [1].

3. Procédé selon la revendication 2, **caractérisé en ce qu'**il comprend en outre une étape de décision de placer le moteur en un mode normal [12] quand le test de correspondance [18] est positif ou quand la vérification [13] est correcte ou en un mode relatif [17] où la position [STP_POS] de l'organe mobile [1] est déterminée par rapport à la position dans laquelle il est à la fin de l'étape de vérification quand la vérification [13] est erronée.

4. Procédé selon la revendication 3, **caractérisé en ce qu'**il comprend en outre une étape de signalisation du passage en mode relatif [17] sur une interface homme machine.

5. Procédé selon l'une des revendications 3 et 4, **caractérisé en ce qu'**il comprend en outre une étape d'enregistrement [20], dans une mémoire non volatile [MEM], d'un défaut [D] auquel est associé la décision de passer en mode relatif [17] et le résultat de l'étape de vérification [13].

6. Procédé selon la revendication 5, **caractérisé en ce que** le résultat de l'étape de vérification [13] permet de distinguer un défaut [D] du à l'organe fixe [2] d'un défaut [D] du à l'organe mobile [1].

7. Procédé selon l'une des revendications 5 et 6, **caractérisé en ce qu'**en mode normal [12], quand le test de correspondance [18'] est négatif, le procédé comprend en outre une étape de consultation [19] des défauts [D] enregistrés suivie soit d'une étape de calibration [15], au cours de laquelle est réalisé au moins un tour complet de l'organe mobile [1] lors duquel sont enregistrées des paramètres [CAM_POS] des modifications de l'état de l'organe fixe [2], quand une décision de passage en mode relatif [17] est enregistrée dans la mémoire non volatile [MEM], soit d'une étape de vérification [13] sinon.

8. Procédé selon la revendication 6, **caractérisé en ce qu'**en mode relatif [17], il inclut une étape de réception d'une demande d'effacement du résultat de l'étape de vérification [13] stipulant un défaut de l'organe mobile [1], une étape d'effacement du défaut de l'organe mobile [1] dans la mémoire non volatile [MEM], cette étape d'effacement provoquant le déclenchement d'une étape de calibration [15], au cours de laquelle est réalisé au moins un tour complet de l'organe mobile [1] lors duquel sont enregistrées des paramètres [CAM_POS] des modifications de l'état de l'organe fixe [2].

9. Procédé selon la revendication 6, **caractérisé en ce qu'**en mode relatif [17], il inclut une étape de réception d'une demande d'effacement du résultat de l'étape de vérification [13] stipulant un défaut de l'organe fixe [2], une étape d'effacement du défaut de l'organe fixe [2] dans la mémoire non volatile [MEM], cette étape d'effacement provoquant le déclenchement d'une étape de calibration [15] ou d'une étape de vérification [13] en fonction de la présence ou non d'un enregistrement d'un défaut [D] de l'organe mobile [1].

10. Procédé selon l'une des revendications précédentes, **caractérisé en ce que** les paramètres [CAM_POS] des modifications de l'état de l'organe fixe [2] sont préalablement définies dans une étape de calibration [15] préalable au cours de laquelle est réalisé au moins un tour complet de l'organe mobile [1] lors duquel sont enregistrées des paramètres [CAM_POS] des modifications de l'état de l'organe fixe [2].

11. Procédé selon l'une des revendications précédentes, **caractérisé en ce qu'**il inclut une étape de réception d'une demande extérieure de déclenchement d'une étape de calibration [15], au cours de laquelle est réalisé au moins un tour complet de l'organe mobile [1] lors duquel sont enregistrées des paramètres [CAM_POS] des modifications de l'état de l'organe fixe [2].

12. Procédé selon l'une des revendications précédentes, **caractérisé en ce que** le test de correspondance [18] est effectué lorsqu'une modification de l'état de l'organe fixe [2] est attendue au vu des paramètres prédéfinis [CAM_POS] ou lorsque le moteur est à l'arrêt.

13. Procédé selon l'une des revendications précédentes, **caractérisé en ce que** les paramètres des modifications [CAM_POS] de l'état de l'organe fixe [2] sont tels qu'ils permettent de définir le sens de rotation de l'organe mobile [1].

14. Procédé selon l'une des revendications précédentes, **caractérisé en ce que**, l'état de l'organe fixe [2] pouvant être modifié entre deux états, les paramètres des modifications incluent, en référence à l'origine angulaire, des nombres de pas [Cam11, Cam21] ou des pourcentages de la circonférence correspondant à au moins deux modifications du premier état vers le second état, les nombres de pas [Cam12, Cam22] ou les pourcentages de la circonférence correspondant à au moins deux modifications du second état vers le premier état, modifications dues à la présence de au moins deux cames [5,6] d'une longueur en nombre de pas différentes sur l'organe mobile [1].

15. Moteur pas à pas comprenant une unité de contrôle [8], un bloc moteur [7], un organe mobile [1] en rotation sans butée et destiné à coopérer avec au moins un organe fixe [2] dont l'état est susceptible d'être modifié lors de la rotation de l'organe mobile [1], **caractérisé en ce que** l'unité de contrôle [8] est apte à contrôler la position angulaire [STP_POS] dudit organe mobile [1] destiné à coopérer avec ledit au moins un organe fixe [2] dont l'état est susceptible d'être modifié lors de la rotation de l'organe mobile [1] selon des paramètres [CAM_POS] préalablement définis en fonction de la position angulaire [STP_POS] de l'organe mobile [1], ladite unité de contrôle [8] étant apte à associer chaque position angulaire [STP_POS] de l'organe mobile [1] à un état de l'organe fixe [2] pour définir les paramètres [CAM_POS] et étant apte à faire un test de correspondance [18] en comparant l'état de l'organe fixe [2] avec les paramètres [CAM_POS] préalablement définis, pour la position [STP_POS] dans laquelle se trouve l'organe mobile [1].

16. Moteur pas à pas selon la revendication 15, **caractérisé en ce que** l'organe mobile [1] en rotation supporte deux cames [5,6] de tailles différentes en nombre de pas du moteur.

17. Moteur pas à pas selon l'une des revendications 15 et 16, **caractérisé en ce que** l'organe fixe [2] est un contacteur à poussoir.

18. Véhicule automobile équipé d'un dispositif d'actionnement de volet de ventilation/climatisation comportant un moteur pas à pas selon l'une des revendications 15 à 17.

19. Programme informatique comportant des instructions de code pour l'exécution des étapes du procédé de contrôle de position selon l'une quelconque des revendications 1 à 14 lorsque ledit programme est exécuté par une unité de contrôle [8] d'un moteur pas à pas selon l'une quelconque des revendications 15 à 17.

20. Support d'informations sur lequel est enregistré un programme informatique comprenant des instructions de code pour l'exécution des étapes du procédé de contrôle de position selon l'une quelconque des revendications 1 à 14.

## Patentansprüche

1. Verfahren zur Steuerung der Winkelposition [STP_POS] eines eine anschlaglose Rotation ausführenden beweglichen Organs [1] eines Schrittmotors, wobei das bewegliche Organ [1] dazu bestimmt ist, mit wenigstens einem festen Organ [2] zusammenzuwirken, dessen Zustand während der Rotation des beweglichen Organs [1] veränderbar ist, **dadurch gekennzeichnet, dass** der Zustand gemäß Parametern [CAM_POS] geändert wird, die zuvor in Abhängigkeit von der Winkelposition [STP_POS] des beweglichen Organs [1] definiert wurden, wobei das Verfahren die folgenden Schritte umfasst:
- Zuordnen jeder Winkelposition [STP_POS] des beweglichen Organs [1] zu einem Zustand des festen Organs [2], um die Parameter [CAM_POS] zu definieren,
- Durchführen eines Entsprechungstests [18] durch Vergleichen des Zustands des festen Organs [2] mit den zuvor definierten Parametern [CAM_POS] für die Position [STP_POS], in welcher sich das bewegliche Organ [1] befindet.

2. Verfahren nach Anspruch 1, **dadurch gekennzeichnet, dass** es außerdem einen Schritt der Überprüfung [13] umfasst, der ausgelöst wird, wenn der Entsprechungstest [18] negativ ausfällt, und in welchem mindestens eine volle Umdrehung des beweglichen Organs [1] ausgeführt wird, um das Eintreten der Änderungen des Zustands des festen Organs [2] gemäß den zuvor definierten Parametern [CAM_POS] in Abhängigkeit von der Position [STP_POS] des beweglichen Organs [1] zu überprüfen.

3. Verfahren nach Anspruch 2, **dadurch gekennzeichnet, dass** es außerdem einen Schritt der Entscheidung umfasst, den Motor in eine normale Betriebsart [12] zu versetzen, wenn der Entsprechungstest [18] positiv ausfällt oder wenn die Überprüfung [13] korrekt ausfällt, oder in eine relative Betriebsart [17], in der die Position [STP_POS] des beweglichen Organs [1] in Bezug auf die Position bestimmt wird, in der es sich am Ende des Schrittes der Überprüfung befindet, wenn die Überprüfung [13] Fehler aufzeigt.

4. Verfahren nach Anspruch 3, **dadurch gekennzeichnet, dass** es außerdem einen Schritt der Signalisierung des Übergangs in die relative Betriebsart [17] auf einer Mensch-Maschine-Schnittstelle umfasst.

5. Verfahren nach einem der Ansprüche 3 und 4, **dadurch gekennzeichnet, dass** es außerdem einen Schritt der Aufzeichnung [20], in einem nichtflüchtigen Speicher [MEM], eines Fehlers [D], welchem die Entscheidung, in die relative Betriebsart [17] überzugehen, zugeordnet ist, und des Ergebnisses des Schrittes der Überprüfung [13] umfasst.

6. Verfahren nach Anspruch 5, **dadurch gekennzeichnet, dass** das Ergebnis des Schrittes der Überprüfung [13] ermöglicht, einen Fehler [D], der auf das feste Organ [2] zurückzuführen ist, von einem Fehler [D] zu unterscheiden, der auf das bewegliche Organ [1] zurückzuführen ist.

7. Verfahren nach einem der Ansprüche 5 und 6, **dadurch gekennzeichnet, dass** in der normalen Betriebsart [12], wenn der Entsprechungstest [18'] negativ ausfällt, das Verfahren außerdem einen Schritt der Abfrage [19] der aufgezeichneten Fehler [D] umfasst, auf den entweder ein Schritt der Kalibrierung [15] folgt, in welchem mindestens eine volle Umdrehung des beweglichen Organs [1] ausgeführt wird, während welcher Parameter [CAM_POS] der Änderungen des Zustands des festen Organs [2] aufgezeichnet werden, wenn eine Entscheidung des Übergangs in die relative Betriebsart [17] im nichtflüchtigen Speicher [MEM] aufgezeichnet ist, oder andernfalls ein Schritt der Überprüfung [13].

8. Verfahren nach Anspruch 6, **dadurch gekennzeichnet, dass** es in der relativen Betriebsart [17] einen Schritt des Empfangs einer Anforderung zum Löschen des Ergebnisses des Schrittes der Überprüfung [13], das einen Fehler des beweglichen Organs [1] vorsieht, einen Schritt des Löschens des Fehlers des beweglichen Organs [1] im nichtflüchtigen Speicher [MEM] beinhaltet, wobei dieser Schritt des Löschens die Auslösung eines Schrittes der Kalibrierung [15] hervorruft, in welchem mindestens eine volle Umdrehung des beweglichen Organs [1] ausgeführt wird, während welcher Parameter [CAM_POS] der Änderungen des Zustands des festen Organs [2] aufgezeichnet werden.

9. Verfahren nach Anspruch 6, **dadurch gekennzeichnet, dass** es in der relativen Betriebsart [17] einen Schritt des Empfangs einer Anforderung zum Löschen des Ergebnisses des Schrittes der Überprüfung [13], das einen Fehler des festen Organs [2] vorsieht, einen Schritt des Löschens des Fehlers des festen Organs [2] im nichtflüchtigen Speicher [MEM] beinhaltet, wobei dieser Schritt des Löschens die Auslösung eines Schrittes der Kalibrierung [15] oder eines Schrittes der Überprüfung [13] hervorruft, in Abhängigkeit von Vorhandensein oder Nichtvorhandensein einer Aufzeichnung eines Fehlers [D] des beweglichen Organs [1].

10. Verfahren nach einem der vorhergehenden Ansprüche, **dadurch gekennzeichnet, dass** die Parameter [CAM_POS] der Änderungen des Zustands des festen Organs [2] zuvor in einem vorausgehenden Schritt der Kalibrierung [15] definiert werden, in welchem mindestens eine volle Umdrehung des beweglichen Organs [1] ausgeführt wird, während welcher Parameter [CAM_POS] der Änderungen des Zustands des festen Organs [2] aufgezeichnet werden.

11. Verfahren nach einem der vorhergehenden Ansprüche, **dadurch gekennzeichnet, dass** es einen Schritt des Empfangs einer externen Anforderung zur Auslösung eines Schrittes der Kalibrierung [15] beinhaltet, in welchem mindestens eine volle Umdrehung des beweglichen Organs [1] ausgeführt wird, während welcher Parameter [CAM_POS] der Änderungen des Zustands des festen Organs [2] aufgezeichnet werden.

12. Verfahren nach einem der vorhergehenden Ansprüche, **dadurch gekennzeichnet, dass** der Entsprechungstest [18] durchgeführt wird, wenn angesichts der vordefinierten Parameter [CAM_POS] eine Änderung des Zustands des festen Organs [2] erwartet wird, oder wenn der Motor stillsteht.

13. Verfahren nach einem der vorhergehenden Ansprüche, **dadurch gekennzeichnet, dass** die Parameter der Änderungen [CAM_POS] des Zustands des festen Organs [2] so beschaffen sind, dass sie ermöglichen, die Drehrichtung des beweglichen Organs [1] zu definieren.

14. Verfahren nach einem der vorhergehenden Ansprüche, **dadurch gekennzeichnet, dass**, wenn der Zustand des festen Organs [2] zwischen zwei Zuständen geändert werden kann, die Parameter der Änderungen, unter Bezugnahme auf den Winkelursprung, Schrittzahlen [Cam11, Cam21] oder prozentuale Anteile des Umfangs, die wenigstens zwei Änderungen vom ersten Zustand hin zum zweiten Zustand entsprechen, und die Schrittzahlen [Cam12, Cam22] oder die prozentualen Anteile des Umfangs, die wenigstens zwei Änderungen vom zweiten Zustand hin zum ersten Zustand entsprechen, beinhalten, wobei die Änderungen auf das Vorhandensein von wenigstens zwei Nocken [5, 6] mit Längen, die unterschiedlichen Schrittzahlen entsprechen, auf dem beweglichen Organ [1] zurückzuführen sind.

15. Schrittmotor, welcher eine Steuereinheit [8], einen Motorblock [7] und ein bewegliches Organ [1], das eine anschlaglose Rotation ausführt und dazu bestimmt ist, mit wenigstens einem festen Organ [2] zusammenzuwirken, dessen Zustand während der Rotation des beweglichen Organs [1] veränderbar ist, umfasst, **dadurch gekennzeichnet, dass** die Steuereinheit [8] dafür ausgelegt ist, die Winkelposition [STP_POS] des beweglichen Organs [1], das dazu bestimmt ist, mit dem wenigstens einen festen Organ [2] zusammenzuwirken, dessen Zustand während der Rotation des beweglichen Organs [1] veränderbar ist, gemäß Parametern [CAM_POS] zu steuern, die zuvor in Abhängigkeit von der Winkelposition [STP_POS] des beweglichen Organs [1] definiert wurden, wobei die Steuereinheit [8] dafür ausgelegt ist, jede Winkelposition [STP_POS] des beweglichen Organs [1] einem Zustand des festen Organs [2] zuzuordnen, um die Parameter [CAM_POS] zu definieren, und dafür ausgelegt ist, einen Entsprechungstest [18] durch Vergleichen des Zustands des festen Organs [2] mit den zuvor definierten Parametern [CAM_POS] für die Position [STP_POS], in welcher sich das bewegliche Organ [1] befindet, durchzuführen.

16. Schrittmotor nach Anspruch 15, **dadurch gekennzeichnet, dass** das drehbewegliche Organ [1] zwei Nocken [5, 6] mit Größen trägt, die unterschiedlichen Schrittzahlen des Motors entsprechen.

17. Schrittmotor nach einem der Ansprüche 15 und 16, **dadurch gekennzeichnet, dass** das feste Organ [2] ein Stößelschalter ist.

18. Kraftfahrzeug, welches mit einer Vorrichtung zur Betätigung der Lüftungsklappe/Klappe der Klimaanlage ausgestattet ist, die einen Schrittmotor nach einem der Ansprüche 15 bis 17 aufweist.

19. Computerprogramm, welches Codeanweisungen zur Ausführung der Schritte des Verfahrens zur Steuerung der Position nach einem der Ansprüche 1 bis 14, wenn das Programm von einer Steuereinheit [8] eines Schrittmotors nach einem der Ansprüche 15 bis 17 ausgeführt wird, umfasst.

20. Datenträger, auf welchem ein Computerprogramm aufgezeichnet ist, das Codeanweisungen zur Ausführung der Schritte des Verfahrens zur Steuerung der Position nach einem der Ansprüche 1 bis 14 umfasst.

## Claims

1. Method for controlling the angular position [STP_POS] of a stopless rotatably movable member [1] of a stepper motor, the said movable member [1] being designed to interact with at least one fixed member [2] whose state is capable of being modified during the rotation of the movable member [1], **characterized in that** the state is modified according to parameters [CAM_POS] previously defined according to the angular position [STP_POS] of the movable member [1], the method comprising the following steps:
- associating each angular position [STP_POS] of the movable member [1] with a state of the fixed member [2] to define the parameters [CAM_POS],
- carrying out a correspondence test [18] by comprising the state of the fixed member [2] with the previously defined parameters [CAM_POS] for the position [STP_POS] in which the movable member [1] finds itself.

2. Method according to Claim 1, **characterized in that** it also comprises a verification step [13], initiated when the correspondence test [18] is negative, during which at least one complete revolution of the movable member [1] is completed in order to verify the occurrence of the modifications of the state of the fixed member [2] according to the parameters [CAM_POS] previously defined according to the position [STP_POS] of the movable member [1].

3. Method according to Claim 2, **characterized in that** it also comprises a step of deciding to place the motor in a normal mode [12] when the correspondence test [18] is positive or when the verification [13] is correct or in a relative mode [17] in which the position [STP_POS] of the movable member [1] is determined relative to the position in which it is at the end of the verification step when the verification [13] is incorrect.

4. Method according to Claim 3, **characterized in that** it also comprises a step of signalling the transition to relative mode [17] on a man-machine interface.

5. Method according to one of Claims 3 and 4, **characterized in that** it also comprises a step of recording [20], in a non-volatile memory [MEM], a fault [D] with which is associated the decision to pass to relative mode [17] and the result of the verification step [13].

6. Method according to Claim 5, **characterized in that** the result of the verification step [13] makes it possible to distinguish a fault [D] due to the fixed member [2] from a fault [D] due to the movable member [1] .

7. Method according to one of Claims 5 and 6, **characterized in that**, in normal mode [12], when the correspondence test [18'] is negative, the method also comprises a step [19] of consulting the recorded faults [D] followed either by a calibration step [15], during which at least one complete revolution of the movable member [1] is completed during which parameters [CAM_POS] of the modifications of the state of the fixed member [2] are recorded, when a decision to switch to relative mode [17] is recorded in the non-volatile memory [MEM], or a verification step [13] otherwise.

8. Method according to Claim 6, **characterized in that**, in relative mode [17], it includes a step of receiving a request for the deletion of the result of the verification step [13] stipulating a fault of the movable member [1], a step of deleting the fault of the movable member [1] from the non-volatile memory [MEM], this deletion step causing the initiation of a calibration step [15], during which at least one complete revolution of the movable member [1] is completed during which parameters [CAM_POS] of the modifications of the state of the fixed member [2] are recorded.

9. Method according to Claim 6, **characterized in that**, in relative mode [17], it includes a step of receiving a request for the deletion of the result of the verification step [13] stipulating a fault of the fixed member [2], a step of deleting the fault of the fixed member [2] from the non-volatile memory [MEM], this deletion step causing the initiation of a calibration step [15] or of a verification step [13] depending on whether or not a record of a fault [D] of the movable member [1] is present.

10. Method according to one of the preceding claims, **characterized in that** the parameters [CAM_POS] of the modifications of the state of the fixed member [2] are previously defined in a previous calibration step [15] during which at least one complete revolution of the movable member [1] is completed during which parameters [CAM_POS] of the modifications of the state of the fixed member [2] are recorded.

11. Method according to one of the preceding claims, **characterized in that** it includes a step of receiving an external request to initiate a calibration step [15], during which at least one complete revolution of the movable member [1] is completed during which parameters [CAM_POS] of the modifications of the state of the fixed member [2] are recorded.

12. Method according to one of the preceding claims, **characterized in that** the correspondence test [18] is run when a modification of the state of the fixed member [2] is expected in view of the predefined parameters [CAM_POS] or when the motor is stopped.

13. Method according to one of the preceding claims, **characterized in that** the parameters of the modifications [CAM_POS] of the state of the fixed member [2] are such that they make it possible to define the direction of rotation of the movable member [1].

14. Method according to one of the preceding claims, **characterized in that**, the state of the fixed member [2] being able to be modified between two states, the parameters of the modifications include, with reference to the angular origin, numbers of steps [Cam11, Cam21] or percentages of the circumference corresponding to at least two modifications from the first state to the second state, the numbers of steps [Cam12, Cam22] or the percentages of the circumference corresponding to at least two modifications from the second state to the first state, modifications due to the presence of at least two cams [5,6] of a length in number of different steps on the movable member [1].

15. Stepper motor comprising a control unit [8], a motor block [7], a stopless rotatably movable member [1] designed to interact with at least one fixed member [2] whose state is capable of being modified during the rotation of the movable member [1], **characterized in that** the control unit [8] is capable of controlling the angular position [STP_POS] of said movable member [1] designed to interact with said at least one fixed member [2] whose state is capable of being modified during the rotation of the movable member [1] according to parameters [CAM_POS] previously defined according to the angular position [STP_POS] of the movable member [1], said control unit [8] being capable of associating each angular position [STP_POS] of the movable member [1] with a state of the fixed member [2] to define the parameters [CAM_POS] and being capable of carrying out a correspondence test [18] by comparing the state of the fixed member [2] with the previously defined parameters [CAM_POS] for the position [STP_POS] in which the movable member [1] finds itself.

16. Stepper motor according to Claim 15, **characterized in that** the rotatably movable member [1] supports two cams [5,6] of different sizes in number of steps of the motor.

17. Stepper motor according to one of Claims 15 and 16, **characterized in that** the fixed member [2] is a pushbutton contactor.

18. Motor vehicle fitted with a device for actuating a ventilation/air conditioning shutter comprising a stepper motor according to one of Claims 15 to 17.

19. Computer program comprising code instructions for the execution of the steps of the position control method according to any one of Claims 1 to 14, when the said program is run by a control unit [8] of a stepper motor according to any one of Claims 15 to 17.

20. Information medium on which is recorded a computer program comprising code instructions for executing the steps of the position control method according to any one of Claims 1 to 14.
